# EUROPEAN PATENT SPECIFICATION

(11) **EP 1 840 346 B1**
(45) Date of publication and mention of the grant of the patent: **10.06.2009**
(21) Application number: 07005371.5
(22) Date of filing: 15.03.2007
(51) Int. Cl.: F01N 3/021, F01N 3/28

(54) **Sheet member and exhaust gas processing device and manufacturing method of the same**
Matte, Abgasbehandlungseinrichtung und Verfahren zu ihrer Herstellung
Mat, dispositif de traitement des gaz d'échappement et procédé pour sa production

(30) Priority: 31.03.2006 JP 2006100409; 28.09.2006 JP 2006265432
(43) Date of publication of application: 03.10.2007
(73) Proprietor: IBIDEN CO., LTD., Ogaki-shi Gifu 503-8604 (JP)
(72) Inventor: Okabe, Takahiko, Ogaki-shi Gifu 503-8559 (JP)
(74) Representative: HOFFMANN EITLE

(56) References cited:
- EP-A1- 1 267 048
- EP-A1- 1 329 601
- WO-A-94/16134
- FR-A- 2 663 961
- JP-A- 7 286 514
- JP-A- 2001 065 337
- JP-A- 2001 259 438
- US-A- 5 636 420
- US-A- 5 732 453
- US-A- 6 158 097

## Description

### BACKGROUND OF THE INVENTION

### 1. Field of the Invention

This invention generally relates to an exhaust gas processing device of vehicles using a sheet member including inorganic fibers as a holding sealer.

### 2. Description of the Related Art

The number of cars has been greatly increasing since the beginning of this century, and the amount of exhaust gas from car engines has been increasing amazingly as the number of cars continues to increase. Especially, various materials in the exhaust gas from diesel engines trigger environmental pollution, so that these materials are influencing seriously the global environment currently.

Under this circumstance, various exhaust gas processing devices have been suggested, and these have been used practically. A typical exhaust gas processing device has a casing (metallic shell) on an exhaust pipe connected to an exhaust gas manifold of the engine, in which casing an exhaust gas processing body having lots of small holes is arranged. As an example of the exhaust gas processing body, there are a catalyst carrier and a diesel particulate filter (DPF). For example, in the case of DPF, particles are trapped by walls around holes during the exhaust gas passing through the exhaust gas processing body based on the above structure, thereby particles can be removed from the exhaust gas. Constituent materials of the exhaust gas processing body are metals, alloys, ceramics, etc. As a typical example of the exhaust gas processing body comprising ceramics, a honeycomb filter made by cordierite is known. Recently, from the viewpoint of heat resistance, mechanical strength, chemical stability, etc., a porous silundum sintered body is used as the exhaust gas processing body.

Usually, the holding sealer is placed between the above exhaust gas processing body and the metallic shell. The holding sealer is used for protecting against breakage due to contact of the exhaust gas processing body with the metallic shell during vehicle runs, and for protecting against leakage of the exhaust gas from a gap between the metallic shell and the exhaust gas processing body. Also, the holding sealer plays an important role in preventing the exhaust gas processing body from falling off due to exhaust pressure of the exhaust gas. Moreover, the exhaust gas processing body needs to maintain high temperature for stabilizing the reaction, and also the holding sealer needs to be heat resistance. As a constituent member satisfying these requirements, there is a sheet member comprising inorganic fibers such as alumina system fiber, etc.

The sheet member is wound around at least a portion of an outer surface except an open surface of the exhaust gas processing body. Then after being fixed as one body with the exhaust gas processing body by means of taping, the one whole body is assembled into the exhaust gas processing device by pressing the body into the metallic shell.

In general, the above sheet member is manufactured by a needling process. The needling process is where needles are stabbed (inserted) into the sheet member and pulled out from the sheet member, thereby allowing the sheet to be thin. By this process, an inter-woven point (a point where needles are stabbed into and pulled off), fibers are woven into the sheet member along the thickness direction of the sheet member and make the thickness of the sheet member thin. Thereby, bulkiness of the sheet member is restricted and it is possible to obtain a sheet member which is easy to handle.

However, there are possibilities of having position gaps and space gaps, or cracks and/or detachment on the holding sealer press-fitted in the casing because the holding sealer is affected by a great shearing force due to friction between the holding sealer and the casing inner wall when the holding sealer is press-fitted into the casing. When such position gaps and space gaps occur, a sealing ability of the holding sealer will be lost and also functions of the holding sealer can not be shown. Thus, in order to solve the above mentioned problem, a method to facilitate a press fit into a casing of the holding sealer by controlling a distribution pattern of inter-woven points of the sheet member is proposed (see the patent document 1).

Patent Document 1: JP-A 2001-65337

### SUMMARY OF THE INVENTION

In general, when inter-woven points included in the unit area of the sheet member are increased, concentration of the sheet member is increased. Thus the strength of the sheet member is increased, but the flexibility of the sheet member is lost and a repulsion capability of the sheet member is decreased. On the other hand, when inter-woven points included in the unit area of the sheet member are decreased, the flexibility of the sheet member is increased; thus the repulsion capability of the sheet member is increased, but concentration of the sheet member is decreased and the strength is decreased. Therefore, when the sheet member is used as the holding sealer of the exhaust gas processing device, it is needed for the inter-woven point number and a pattern of inter-woven point to be determined to fulfill both characteristics, but strength and repulsion capability of the sheet member are contradictory. However, in the above patent document 1, only an arrangement of the inter-woven points to press the sheet member into the casing with ease was considered. Thus, only by this consideration, a sheet member which optimizes both characteristics of the above description cannot be obtained.

Also, a method to place one article of the exhaust gas processing body and the holding sealer into the casing is not limited to the above mentioned pressing method; for example, there is another method like a sizing method. The sizing method is a method to place the one article into the housing such that the one article is inserted into the housing having a large outer diameter which is larger than an outer diameter of the one article without friction or with small friction. After that the casing is compressed from the outside of the casing and the inner diameter of the casing is decreased, then a gap between the one article and an inner wall of the casing is filled. For the sizing method, since a shearing force like in a pressing method does not occur while placing the one article, compared with strength as a characteristic of the sheet member, the importance of repulsion capability relatively increases. Thus, an appropriate range of both characteristics (strength and repulsion) of the sheet member is different depending on the placing method of the one article.

Accordingly, it is a general object of the present invention to provide an exhaust gas processing device with a sheet member which the both characteristics of strength and repulsion of the sheet member are suitable for the pressing method.

In order to achieve the above-mentioned object, there is provided according to one aspect of the present invention, an exhaust gas processing device with a sheet member including inorganic fibers, in which the sheet member has multiple inter-woven points formed on at least either surface or back side of the sheet member by a needling process, wherein a density ρ of an inter-woven point is in a range 5 number/cm² ≦ ρ < 20 number/cm².

Additionally, in the sheet member according to an embodiment of the present invention, the inter-woven points may be formed in a row pattern distributed in whole area or all over the whole area on at least either surface or back side of the sheet member. Also, "distributed in whole area" means that the inter-woven points are arranged randomly without forming a certain cycled pattern in evenly or unevenly over the whole area (for example, "even dispersion pattern" as discussed below is applicable).

The sheet member having such density ρ of the inter-woven points has both characteristics of the necessary strength and high repulsion. For example, when the sheet member is used as the holding sealer for the exhaust gas processing device, the occurrence of cracks and/or detachment at the time of winding the sheet member is restricted, and it is possible to have good holding ability to the exhaust gas processing body.

Here, "the repulsion of the sheet member" is a force which is applied in a direction to deny the repulsion when the pressing force is applied to the sheet member. As described above, the holding sealer is provided between the inner wall of the casing and the exhaust gas processing body for the exhaust gas processing device. Since the holding sealer is pressed from the both sides, the holding ability relative to the exhaust gas processing body is increased as the repulsion is increased when the sheet member is used as the holding sealer.

Additionally, in the sheet member according to an embodiment of the present invention, the sheet member may comprise binders. An adhesive property between fibers is improved by including binders, so that it is possible to prevent a scattering of fibers at the time of handling the sheet member.

Additionally, in the sheet member according to an embodiment of the present invention, the inorganic fibers may be a mixture of alumina and silica.

In order to achieve the above-mentioned object, there is provided according the present invention, an exhaust gas processing device comprising: a exhaust gas processing body, a holding sealer used with at least a portion of outer surfaces of the exhaust gas processing body and a casing housing the exhaust gas processing body which is wound around with the holding sealer, wherein the holding sealer includes inorganic fibers in the sheet member having multiple inter-woven points formed on at least either surface or back side of the sheet member by a needling process, wherein a density ρ of inter-woven points is in a range 5 number/cm² ≦ ρ < 20 number/cm², and wherein the exhaust gas processing body around which the holding sealer is wound is placed into the casing by a pressing method. In such an exhaust gas processing device, the holding ability to the exhaust gas processing body while necessary strength is being secured at the time of winding of the holding sealer can be improved.

Additionally, in the exhaust gas processing device according to an embodiment of the present invention, the inter-woven points may be formed in a row pattern distributed in a whole area or all over the whole area on at least either surface or back side of the sheet member.

Additionally, in the exhaust gas processing device according to an embodiment of the present invention, the exhaust gas processing body may be a catalyst carrier or an exhaust gas filter. In this case, the exhaust gas processing body which is supreme in gas seal-ability and the holding ability to the catalyst carrier, and the exhaust gas filter can be provided.

In the exhaust gas processing device according to the present invention, the density ρ of inter-woven points is in a range 5 number/cm² ≦ ρ < 20 number/cm², and the exhaust gas processing body around which is wound the holding sealer is placed into the casing by a pressing method.

In order to achieve the above-mentioned object, there is also provided according to the present invention, a manufacturing method of an exhaust gas processing device comprising a exhaust gas processing body, a holding sealer, and a casing housing the exhaust gas processing body and the holding sealer inside; wherein the manufacturing method has a step to provide the holding sealer, a step to wind the holding sealer onto at least a part of an outer surface of the exhaust gas processing body, and a step so that the exhaust gas processing body which is wound around with the holding sealer is housed into the casing by a pressing method, wherein the holding sealer includes inorganic fibers in the sheet member having multiple inter-woven points formed on at least either surface or back side of the sheet member by a needling process, wherein a density ρ of inter-woven points is in a range 5 number/cm² ≦ ρ < 20 number/cm².

Additionally, in the manufacturing method of the exhaust gas processing device according to an embodiment of the present invention, it is preferable that the density ρ of inter-woven points be in a range 5 number/cm² ≦ ρ < 15 number/cm².

Additionally, in the manufacturing method of the exhaust gas processing device according to an embodiment of the present invention, the inter-woven points may be formed in a row pattern distributed in a whole area or all over the whole area on at least either surface or back side of the sheet member.

According to an embodiment of the present invention, it is possible to provide an exhaust gas processing device with a sheet member in which both characteristics of strength and repulsion of the sheet member are suitable for the pressing method. Also, by manufacturing the exhaust gas processing device using a pressing method suitable for the sheet member, an exhaust gas processing device which has no position gap or a falling off of the exhaust gas processing body during a usage but has good sealing ability can be obtained.

### BRIEF DESCRIPTION OF THE DRAWINGS

Other objects, features and advantages of the present invention will become more apparent from the following detailed description when read in conjunction with the accompanying drawings, in which:
Fig. 1 is an example of a structure of the sheet member of the present invention;
Fig. 2 is a figure of constitution of the exhaust gas processing device of the present invention, in which the sheet member is used as holding sealer and the exhaust gas processing device is constructed;
Fig. 3 is a figure showing a method to place a covered exhaust gas processing body into the casing by the pressing method;
Fig. 4 is a figure showing a method to place a covered exhaust gas processing body into the casing by a clamshell method;
Fig. 5 is a figure showing a method to place a covered exhaust gas processing body into the casing by a winding and closing method;
Fig. 6 is a figure showing a method to place a covered exhaust gas processing body into the casing by the sizing method;
Fig. 7 is a figure showing the sheet member of the present invention, in which the inter-woven points are formed by other patterning;
Fig. 8 is a figure showing the sheet member of the present invention, in which the inter-woven points are formed by still other patterning;
Fig. 9 is a figure showing the sheet member of the present invention, in which the inter-woven points are formed by further other patterning;
Fig. 10 is a figure showing a method to gather a sample for the inter-woven point density from the sheet member which forms the inter-woven points in a vertical arrangement pattern;
Fig. 11 is a figure showing a flow chart of a manufacturing method of the exhaust gas processing device of an embodiment of the present invention by the pressing method;
Fig. 12 is a figure showing a flow chart of a manufacturing method of the exhaust gas processing device of an embodiment of the present disclosure by a non-pressing method;
Fig. 13 is a figure showing an example of a structure of the exhaust gas processing device of the present invention;
Fig. 14 is a schematic figure of a test apparatus which measures pressure of a surface;
Fig. 15 is a graph showing a relationship between the inter-woven point concentration and surface pressure of the sheet member;
Fig. 16 is a graph showing a relationship between the inter-woven point concentration and a reconstructed surface pressure after 1 cycle;
Fig. 17 is a graph showing a relationship between the inter-woven point concentration and a reconstructed surface pressure after 1000 cycle; and
Fig. 18 is a figure showing a relationship between a compressed speed and a compressed surface pressure which are obtained for the sheet member of each inter-woven point concentration case.

### DESCRIPTION OF THE PREFERRED EMBODIMENTS

Next, a description is given, with reference to the accompanying drawings, of an embodiment of the present invention.

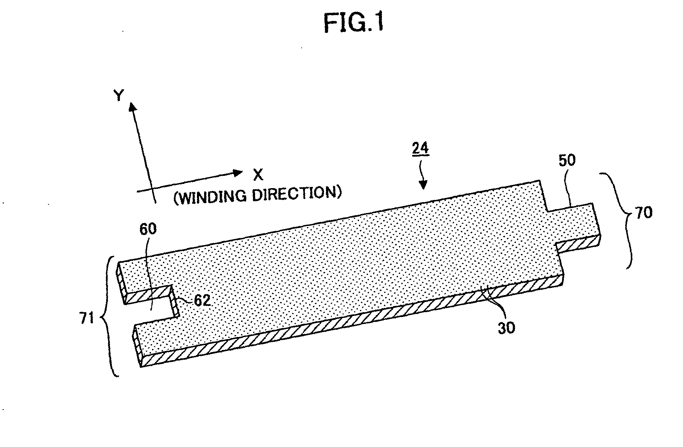

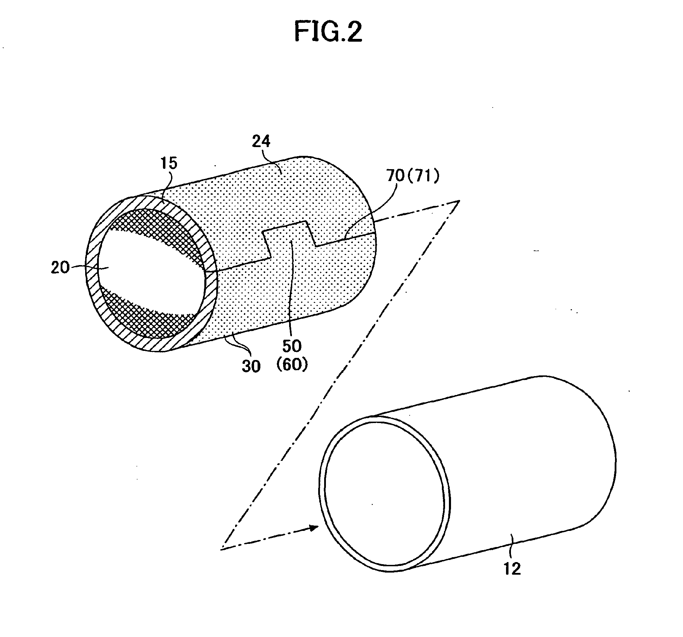

In Fig. 1, an example of the sheet member 24 of the present invention is shown. However, the sheet member of the present invention is not limited to a shape described in Fig. 1. Also, in Fig. 2 is an example of a construction figure for manufacturing the exhaust gas processing device 10, in which the sheet member 24 of the present invention having the shape in Fig. 1 is used as the holding sealer 15 of the exhaust gas processing body 20.

As shown in Fig. 1, the sheet member 24 of the present invention has a pair of fitting salient 50 and fitting reentrant 60 at both edges 70, 71 which are perpendicular to the winding direction (X direction). This sheet member 24 is used as the holding sealer 15. When the sheet member 24 is wound around the exhaust gas processing body 20 like a catalyst carrier (a catalyst converter), the fitting salient 50 and the fitting reentrant 60 are fitted together as shown in figure 2, and then the holding sealer 15 is fixed to the exhaust gas processing body 20. After that, the exhaust gas processing body 20 which is wound around by the holding sealer 15 (hereinafter, it is called a covered exhaust gas processing body 210) is pressed into the cylindrical casing 12 constructed of a metal using the pressing method and placed, as shown in Fig. 2, for example. (This method is described below in more detail.)

The placing method of the covered exhaust gas processing body 210 into the casing 12 according to the present invention is limited to the pressing method. In general, it is possible to manufacture the exhaust gas processing device 10 by placing the covered exhaust gas processing body 210 into the casing 12 using the clamshell method, the winding and closing method and the sizing method (hereinafter, these are called non-pressing methods).

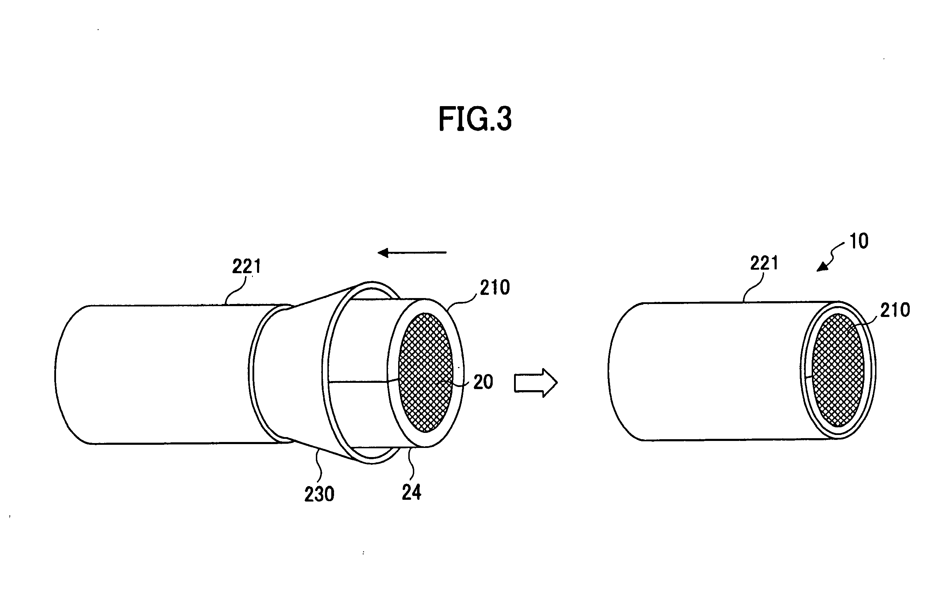

In the below, each placing method is explained in detail using figures. Fig. 3, Fig. 4, Fig. 5 and Fig. 6 are figures showing a method to place a covered exhaust gas processing body 210 into the casing by the pressing method, the clamshell method, the winding and closing method, and the sizing method, respectively.

As described above, the pressing method is a method such that the covered exhaust gas processing body 210 is pressed into one direction of an open surface of the casing 221, thereby the covered exhaust gas processing body 210 is placed in a predetermined position and the exhaust gas processing device 10 is constructed. In order to insert the covered exhaust gas processing body 210 into the casing 221 with ease, as described in Fig. 3, an inner pore diameter is formed such that the pore diameter shrinks towards the other from one, and there is a case to use a press-fitted part 230 in which the minimum inner pore diameter is adjusted to have almost the same dimension as an inner diameter of the casing 221. In this case, the covered exhaust gas processing body 210 is inserted from a side which has the wider inner pore diameter of the press-fitted part 230, then the covered exhaust gas processing body 210 is placed into the casing 221 to a side of the minimum inner pore diameter.

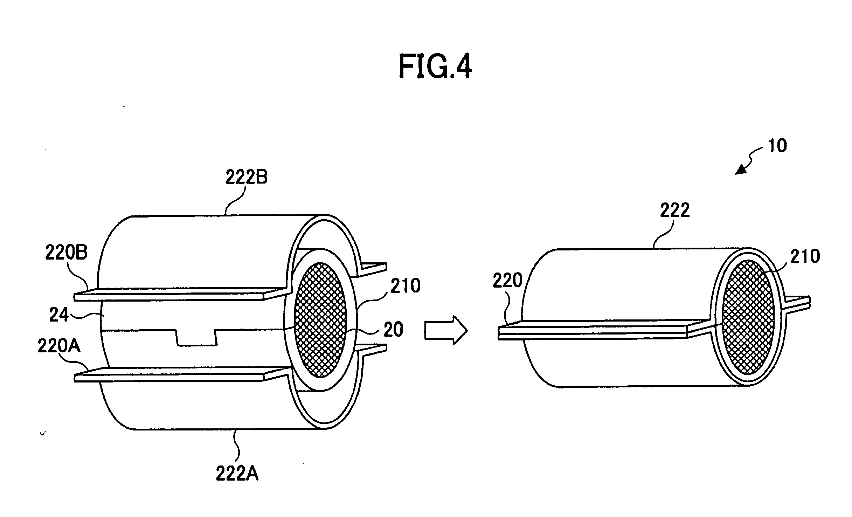

Also, in the clamshell method, as shown in Fig. 4, when casing members are facing each other mutually, the casing member (222A, 222B) which has been divided is used (in the example of Fig. 4, the casing is divided into two parts so that a pair of casings are finished). After the covered exhaust gas processing body 210 is placed on one of the casing members, the rest of the casing members are combined together, then the casing 222 is constructed by welding these members using flange parts 220 (220A, 220B), for example. Thereby, the exhaust gas processing device 10, in which the covered exhaust gas processing body 210 is placed at the predetermined position, can be obtained.

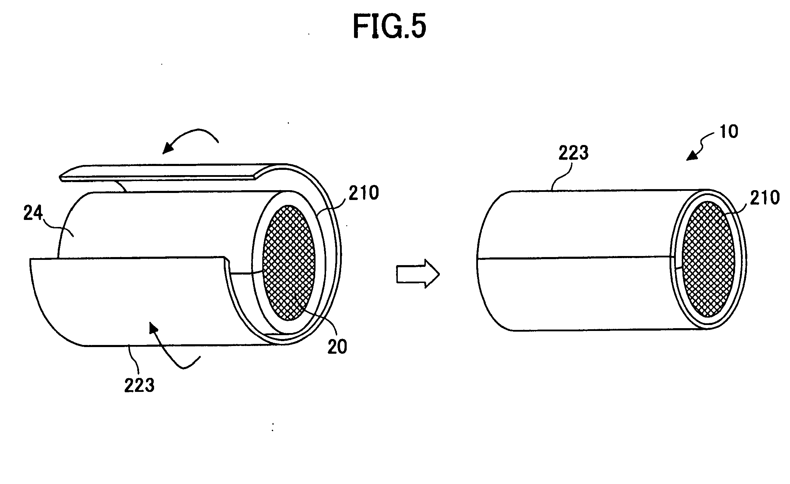

Also, in the winding and closing method, as shown in Fig. 5, after a metal plate 223 which is the casing member is wound around the covered exhaust gas processing body 210, this metal plate 223 is tightened by means of wire rope, so that the metal plate 223 is placed in direct contact with predetermined surface pressure around the covered exhaust gas processing body 210. Finally, one end of the metal plate 223 is welded with the other end or the lower surface of the metal plate 223; thereby the exhaust gas processing device 10, where the covered exhaust gas processing body 210 is placed inside the casing 223, can be obtained.

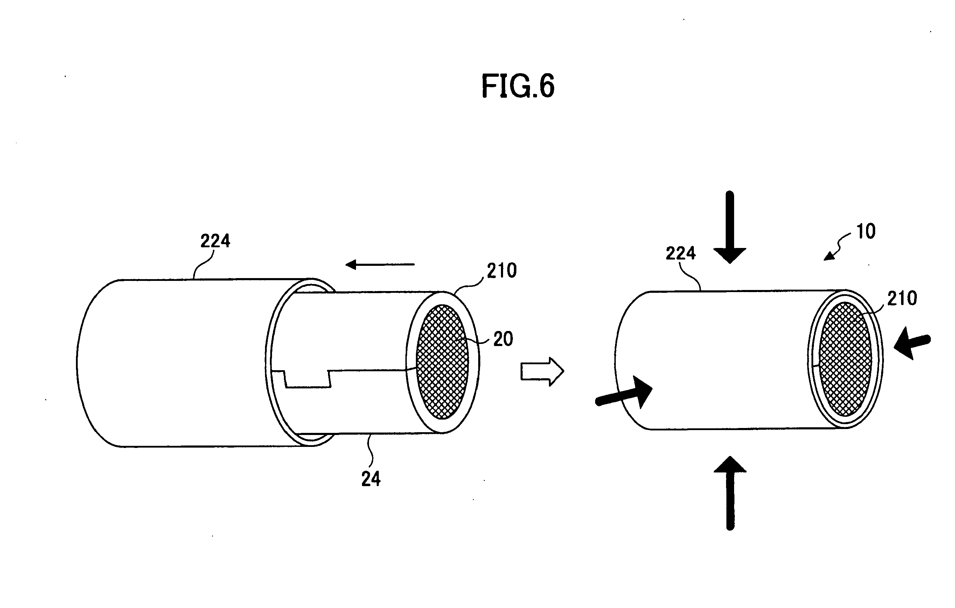

Also, in the sizing method, as shown in Fig. 6, after the covered exhaust gas processing body 210 is inserted into a metallic casing 224, which has an inner diameter that is greater than the outer diameter of the covered exhaust gas processing body 210, without resistance or with small resistance, the metallic casing 224 is compressed evenly from the outer surface of the metallic casing 224 by a pressing device and the like (JIS-z2500-4002). By the sizing process, the inner diameter of the metallic casing 224 is adjusted precisely in desired dimensions and the covered exhaust gas processing body 210 can be placed in a desired position. In the sizing method, a large compression stress is applied to the covered exhaust gas processing body 210 momentarily during processing.

One example of the materials of the casing used for these placing methods is heat-resistant alloys such as stainless steel, for example.

Next, referring Fig.1 again, a characteristic of the present invention is explained. The sheet member 24 of the present invention is manufactured by the needling process, as described below. There are many inter-woven points 30 which are formed by the needling process on the surface of the sheet member 24. Also, the density ρ of the inter-woven points 30 is 5 number/cm² ≦ ρ < 20 number/cm².

In general, the strength and the repulsion capability of the sheet member 24 are contradictory to each other. For example, the strength of the sheet member 24 is improved by increasing the compression degree of the sheet member 24 (for example, the density of the inter-woven points 30 is increased by the needling process). However, for the sheet member 24 having a dramatically increased compression degree, fineness is too increased and flexibility is extremely decreased, thereby the repulsion capability is decreased. On the contrary, if the compression degree of the sheet member 24 is too decreased (for example, the density of the inter-woven points 30 due to the needling process is decreased), its flexibility is increased and the repulsion capability of the sheet member 24 is increased. However, its strength is decreased and it is easy to have cracks and detachment only by receiving a slight stress force. For example, when the sheet member 24 is placed in the exhaust gas processing body 20, the sheet member 24 is wound around the exhaust gas processing body 20 such that tensions occur in both ends 70 and 71 of the sheet member 24**.** Thereby, if the strength of the sheet member 24 is low, when the sheet member 24 is placed in the exhaust gas processing body 20, there is a possibility to have occurrence of cracks and detachment on the sheet member 24.

Therefore, when the sheet member 24 is used as the holding sealer 15 of the exhaust gas processing device, it is needed to optimize both the characteristics of strength and repulsion capability of the sheet member 24.

However, as described the above, there are several methods to place the covered exhaust gas processing body 210 into the casing 224. Among these, it is predicted that an optimal range of both characteristics (strength and repulsion capability) required for the sheet member 24 is different between the pressing method and the non-pressing method; especially, it is predicted that the required strength for the non-pressing method is low compared to the required strength of the pressing method. A large shearing force is applied to the sheet member 24 for the pressing method due to friction between the inner surface of the casing and the covered exhaust gas processing body 210 when the covered exhaust gas processing body 210 is being pressed into the casing. On the other hand, some shearing force is applied for the non-pressing method.

Thus, the inventor of the present invention studied a relationship between the density ρ of the inter-woven points, the strength, and the repulsion capability of the sheet member. As a result, the inventor of the present invention found that there is an optimal range for the peculiar density ρ of the inter-woven points for the sheet member used in the pressing method and the non-pressing method, respectively.

As a result, the range of the density ρ of the inter-woven points for the sheet member used in the covered exhaust gas processing body 210 which is placed by the non-pressing method is preferably 0.5 number/cm² ≦ ρ < 20 number/cm², and more preferably 0.5 number/cm² ≦ ρ < 15 number/cm², and further preferably 0.5 number/cm² ≦ ρ < 10 number/cm ². That is, when the density ρ of the inter-woven points for the sheet member is in the above range, the sheet member which keeps minimum strength and has high repulsion capability can be obtained. Also, the range of the density ρ of the inter-woven points for the sheet member used in the covered exhaust gas processing body 210 which is placed by the pressing method is 5 number/cm² ≦ ρ < 20 number/cm², and more preferably 5 number/cm² ≦ ρ < 15 number/cm². That is, when the density ρ of the inter-woven points for the sheet member is in the above range, the sheet member which keeps minimum strength and has high repulsion capability can be obtained in order to not experience cracks and/or detachment due to the shearing force at the time of pressing. Also, when the density ρ of the inter-woven points for the sheet member used in the covered exhaust gas processing body 210 which is placed by both the non-pressing method and the pressing method is ρ < 15 number/cm², as described below, a sheet member which has remarkably high repulsion capability can be obtained compared to conventional sheet members.

For the sheet member 24 of the present disclosure, the density ρ of the inter-woven points 30 is set as the above description corresponding to the placing method of the sheet member; thus, strength that is enough for the sheet member can be provided. Therefore, even if the sheet member 24 is placed by any placing method, there will be no crack problem as discussed above when the sheet member is wound around the exhaust gas processing body and the sheet member is placed into the casing. In addition, once the sheet member 24 is placed in the device, the sheet member 24 has enough repulsion capability. Thus, an effect can be obtained, in which the sheet member has good holding ability to the exhaust gas processing body 20 so that a positional gap of the exhaust gas processing body 20 inside the device and the exhaust gas getting wet do not occur.

Here, the density ρ of the inter-woven points 30 is measured as discussed below. First of all, using the sheet member whose production is completed, a sample for measurement is prepared by cutting in dimensions 50 mm x 50 mm with a cutter and the like. Next, the sample for measurement is cut in a perpendicular direction to a thickness direction of the sample for measurement with a cutter in order to have about 1/2 of the thickness of the sample for measurement. In this way, a new area of a provided sample for measurement is referred to as surface A. Next, fibers remaining in the inter-woven points of the surface A are removed, then the inter-woven points appear on the surface A. In this way, the inter-woven points appearing on the surface A are counted and the number per a unit area is calculated. Such measurement is performed 5 times totally at the different points on the sheet member, then the density ρ of the inter-woven points 30 (number/cm²) is as average value of obtained values.

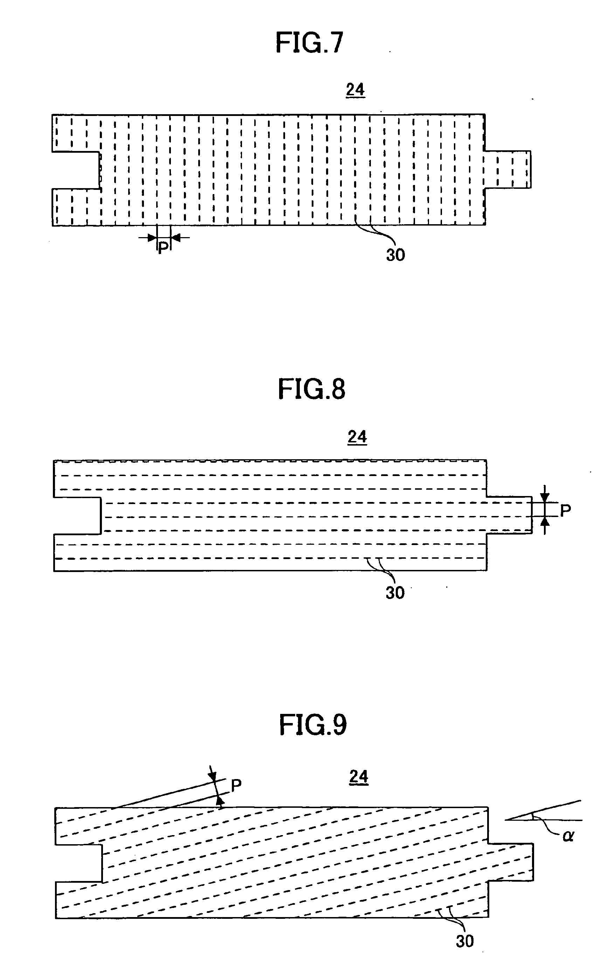

In the example shown in Fig. 1, the inter-woven points 30 are formed almost evenly on the surface of the sheet member. In the below, such arrangement of inter-woven points is referred to as "even dispersion pattern". However, embodiments of the present invention are not limited to the sheet member where the inter-woven points are formed as such an even dispersion pattern. For example, the inter-woven point pattern may be "a vertical arrangement pattern" as shown in Fig.7, "a horizontal arrangement pattern" as shown in Fig.8, and "an inclinational arrangement pattern" as shown in Fig.9. Also, the pattern may be another pattern. For the vertical arrangement pattern, the inter-woven points are constructed in a row of multiple inter-woven points formed in a vertical direction to the long direction of the sheet member 24, and each row of the inter-woven points may be arranged at equal pitch. For the horizontal arrangement pattern, the inter-woven points are constructed in a row of multiple inter-woven points formed in a horizontal direction to the long direction of the sheet member 24, and each row of the inter-woven points may be arranged at equal pitch. For the inclinational arrangement pattern, the inter-woven points are constructed in a row of multiple inter-woven points formed to have a constant angle α to the long direction of the sheet member 24, and each row of the inter-woven points may be arranged at equal pitch.

Here, for the vertical arrangement pattern which is arranged at equal pitch, pitch P of adjacent rows of the inter-woven points is usually between about 1 mm and 15 mm, and preferable between about 3 mm and 6 mm, especially. Also, for the horizontal arrangement pattern which is arranged at equal pitch, pitch P of adjacent rows of the inter-woven points is usually between about 1 mm and 15 mm, and preferable between about 3 mm and 6 mm, especially. Further, for the inclinational arrangement pattern which is arranged at equal pitch, pitch P of adjacent rows of the inter-woven points is usually between about 1 mm and 15 mm, and preferable between about 3 mm and 6 mm, especially. Also, a slope α of the rows of the inter-woven points to the long direction of the sheet member is usually between 1° and 179°, and preferable between 30° and 45° , especially.

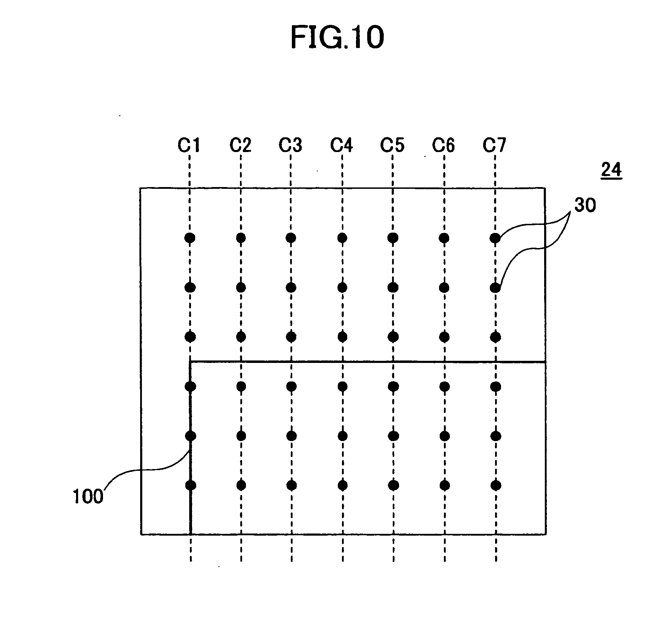

Also, when the inter-woven points 30 of the sheet member are constructed in other than "even dispersion pattern", the measured density ρ of the inter-woven points is greatly varied depending on a way of collection of the sample for measurement (50 mm x 50 mm) from the sheet member. Thus, for the sheet member other than the vertical arrangement pattern, the horizontal arrangement pattern, the inclinational arrangement pattern and the like, and the even dispersion pattern, the sample for measurement of the density of the inter-woven points is collected by the below method. Fig. 10 is an element on larger scale showing the surface of the sheet member 24 which forms the inter-woven points in the vertical arrangement pattern. In this case, the sample for measurement is cut such that one cutting side 100 is cut corresponding to any one of rows of the inter-woven points (in the example of Fig. 10, corresponding to C1 row). Similarly, in the case of the horizontal arrangement pattern, the sample for measurement is cut such that one cutting side 100 is cut corresponding to any one of the lines of the inter-woven points. Also, in the case of the inclinational arrangement pattern, the sample for measurement is cut such that one cutting side 100 of the sample for measurement is cut corresponding to any one of the inclined lines of the inter-woven points. Also in the case of the even dispersion pattern the sample for measurement is collected from an appropriate position on the sheet member in an appropriate direction.

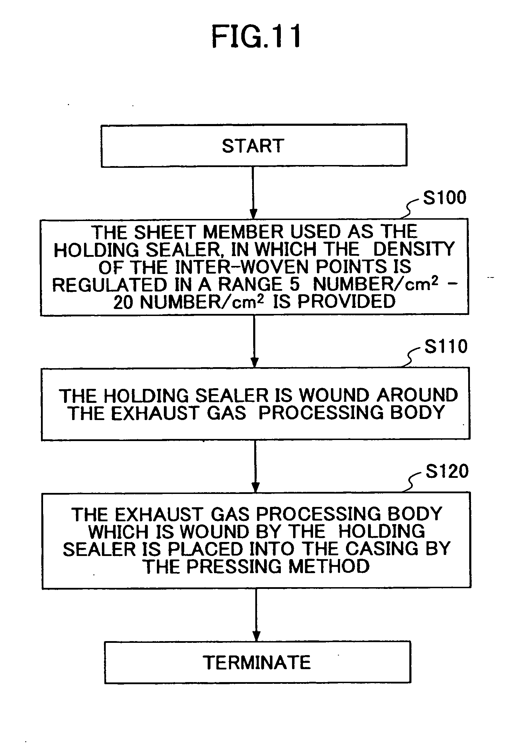

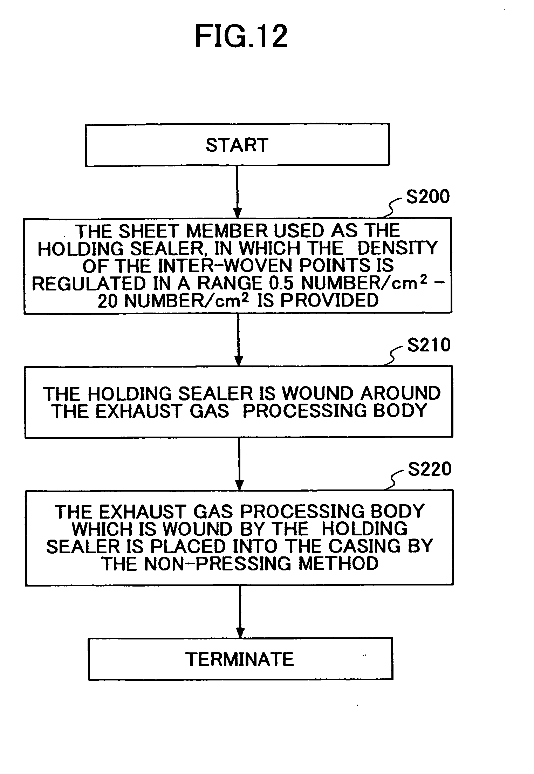

Such sheet member 24 is used as the holding sealer 15, and the exhaust gas processing device 10 can be manufactured as discussed below. The manufacturing flow of the exhaust gas processing device 10 of the present disclosure is shown schematically in Fig. 11 and 12. Fig. 11 shows the pressing method for manufacturing the exhaust gas processing device 10. Fig. 12 shows the non-pressing method for manufacturing the exhaust gas processing device 10.

As shown in Fig. 11, when the exhaust gas processing device 10 is manufactured by the pressing method, first of all, in step S100, the sheet member 24 used as the holding sealer 15, in which the density ρ of the inter-woven points is regulated in a range 5 number/cm² ≦ ρ < 20 number/cm² is provided. Next, in the step S110, this sheet member 24 (that is, the holding sealer 15) is wound around the outer surface of the exhaust gas processing body 20; then, both ends of the sheet member 24 are fitted into and fixed together, and thereby the sheet member 24 and the exhaust gas processing body 20 are unified as one body. Next, in step S120, the exhaust gas processing body 20 which is wound by the holding sealer 15 is placed into the casing 12 by the above pressing method, and thereby the exhaust gas processing device 10 is constructed.

On the other hand, when the exhaust gas processing device 10 is manufactured by the non-pressing method, in step S200, as shown in Fig. 12, the sheet member 24, in which the density ρ of the inter-woven point is regulated in a range 5 number/cm² ≦ ρ < 20 number/cm² is provided. Next, in the step S210, this sheet member 24 (that is, the holding sealer 15) is wound around the outer surface of the exhaust gas processing body 20; then, both ends of the sheet member 24 are fitted into and fixed together, and thereby the sheet member 24 and the exhaust gas processing body 20 are unified as one body. Next, in step S220, the exhaust gas processing body 20 which is wound by the holding sealer 15 is placed into the casing 12 by the non-pressing method like the above described sizing method, and thereby the exhaust gas processing device 10 is constructed.

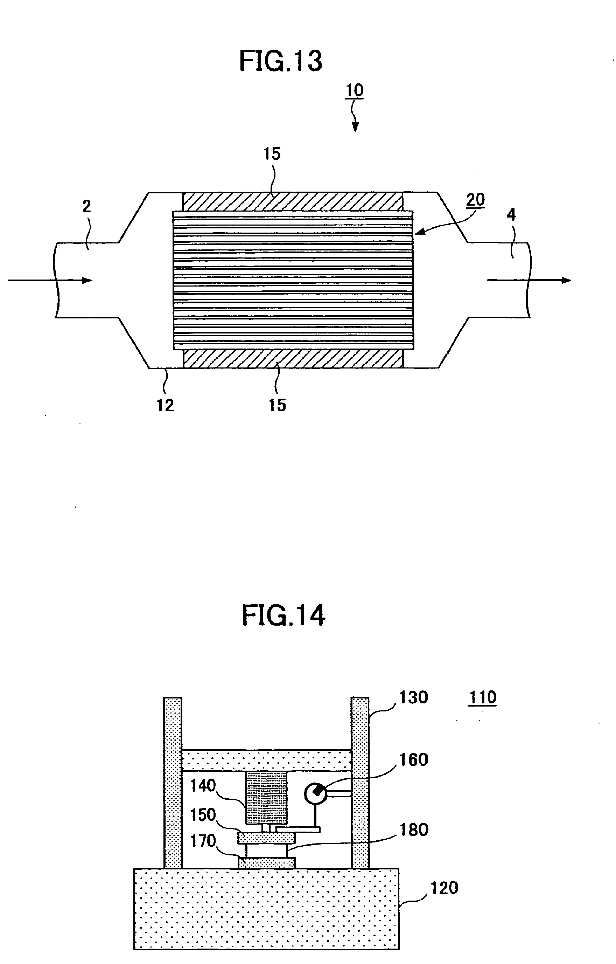

One example of the exhaust gas processing device 10, in which the sheet member 24 is used as the holding sealer 15, is shown in Fig. 13. In Fig. 13, the exhaust gas processing device 10 comprises the exhaust gas processing body 20, the holding sealer 15 and the casing 12. In an example of this figure, the exhaust gas processing body 20 is shown as a catalyst carrier shaped as a cylinder having multiple through-holes in a direction that is parallel to a flow of exhaust gas. Also, on the outer surface of the exhaust gas processing body 20, the holding sealer 15 is wound around and fixed in the above method. Also, the exhaust gas processing body 20 and the holding sealer 15 are placed into the casing 12 by either the pressing method or the non-pressing method. Here, in the case of placing the holding sealer 15 by the pressing method, the density ρ of the inter-woven points of the sheet member used for the holding sealer 15 is in a range 5 number/cm² ≦ ρ < 20 number/cm². Also, in the case of placing the holding sealer 15 by the non-pressing method, the density ρ of the inter-woven points of the sheet member used for the holding sealer 15 is in a range 0.5 number/cm² ≦ ρ < 20 number/cm².

Also, in this figure, the exhaust gas processing body 20 is shown as the catalyst carrier having multiple through-holes in a direction that is parallel to the flow of exhaust gas. However, the exhaust gas processing device 10 of the present invention is not limited to such structure. For example, the exhaust gas processing body 20 may be a DPF in which a part of the through-holes is sealed. For such a structure of the exhaust gas processing device 10, the position of the holding sealer inside the casing is stable and the holding ability against the exhaust gas processing body of the holding sealer is improved because of good repulsion capability of the sheet member of an embodiment of the present invention.

In the below, one example of the manufacturing method of the sheet member according to the present invention is explained.

First, a laminated sheet comprising inorganic fibers is manufactured. In the below description, a mixture of alumina and silica as inorganic fibers can be used, but inorganic fibers are not limited to the above mixture. For example, either only alumina or silica may be used for its structure of inorganic fiber. In one example, silica sol is added to basic aluminum chloride solution (70g/l of aluminum, Al:Cl=1.8 (atomic ratio)) so as to 60-80:40-20 of alumina : silica ratio, thereby the precursor of inorganic fibers is prepared. Especially, it is preferable that alumina : silica ratio is 70-74: 30-26. If the alumina ratio is less than 60%, an existence ratio of mullite produced from alumina and silica become low, so that thermal conductivity of the sheet member after completion increases and enough heat insulation cannot be achieved.

Next, organic polymers such as polyvinyl alcohols are added to the precursor of alumina fibers. Then, this liquid is condensed and a spinning solution is prepared. Also, the spinning is processed with a blowing method by using the spinning solution.

The blowing method is a method for spinning by using an air flow blowing from an air nozzle and a flow of the spinning solution pushed out from a supply nozzle of the spinning solution. Gas speed per slit from the air nozzle is usually 40-200 m/s. Also, the diameter of a spinning nozzle is usually 0.1-0.5 mm. The amount of solution per one supply nozzle of the spinning solution is usually 1-120 ml/h, but 3-50 ml/h is preferable. In such a condition, the spinning solution pushed out from a supply nozzle of the spinning solution does not become a form of spray (form of fog) but spreads enough, and it is hard to become welded between fibers. Because of this, even precursor of alumina fiber in which the distribution of the diameter of fibers is narrow can be obtained by optimizing the spinning condition.

Here, average length of alumina fibers manufactured is longer than or equal to 250 µm, preferably. More preferably, it is longer than or equal to 500 µm. If the average length of fibers is shorter than 250 µm, fibers are not intertwined with each other enough and enough strength is not provided. Also, especially, the average diameter of inorganic fibers is not limited, but the average diameter of inorganic fibers is preferably in a range between about 3 *µ*m and 8 *µ*m, and more preferable between about 5 *µ*m and 7 *µ*m.

The laminated sheet is manufactured by laminating the precursor when spinning is completed. Also, the needling process is performed against the laminated sheet. The needling process is where needles are stabbed (stuck) into the laminated sheet and pulled off from the laminated sheet, thereby allowing the sheet to be thin. Generally, a needling machine is used for the needling process.

Usually, the needling machine comprises a needle board movable back and forth along a stabbing direction (usually, up and down direction) of needles, and a pair of support plates which plates are provided on both the surface and the back side of the laminated sheet. On the needle board, lots of needles for stabbing into the laminated sheet are provided on the board, about 25-5000 needles /100 cm², for example. Therefore, in a state where the laminated sheet is pressed from both sides by the one pair of support plates, needles that are stabbed into the laminated sheet and pulled off from the laminated sheet by means of the needle board are brought close to the laminated sheet and moved away, and thereby multiple inter-woven points where fibers are intertwined are formed. Here, "transporting" means to transport the laminated sheet at a constant transporting speed (for example, about 20 mm/second) and in a determined direction (almost parallel direction to the surface and the back side of the laminated sheet) which may be provided on the needling device. In this case, it is possible to perform the needling process in a situation where the laminated sheet is transported at a constant speed, so that it is not necessary to perform the transportation of the laminated sheet each time the needle board is press-contacted. Also, by communicating the transporting speed and the press-contacting cycle of the needle board, special inter-woven point patterns like the vertical arrangement pattern, the horizontal arrangement pattern or the inclinational arrangement pattern and the like can be formed easily.

Also, two pairs of needle boards may be provided on the needling device as another structure. Each needle board has respective support plates. Two pairs of needle board are disposed on the surface and the back side of the laminated sheets, respectively, and the laminated sheet is fixed from both sides by corresponding support plates. Here, needles are disposed on one of the needle boards not to overlap a position of needles and a group of needles on the other needle board at the time of the needling process. Also, lots of through-holes are provided on the respective support plate so that needles do not directly contact the support plate at the time of the needling process from both sides of the laminated sheet by considering needle displacements of both needle boards. By using such a device, the laminated sheet is sandwiched from both sides by two pairs of support plates; thereby the needling process may be performed from both sides of the laminated sheet by using two pairs of needling boards. The processing period is shortened by performing the needling process with such a method. Also, there is a limit to the number of the needles that can be provided in the needle board, but in this method, it is advantageous that the number of needles that can be provided in the needle board per one device can be reduced.

For the inter-woven points produced by such a needling process, fibers which are intertwined with each other complicatedly are oriented in a laminating direction; thereby reinforcement of the laminating direction of the laminated sheet can be planned. Thus, the strength of the laminated sheet is improved. Also, the sheet member for which the density ρ of the inter-woven points is regulated in a predetermined range can be obtained easily in the needling process.

Then, the sheet member with the needling process applied is heated from ambient temperature, and the predetermined concentration (weight per unit area) of the sheet member can be obtained by continuous firing around the hottest temperature, 1250 °C.

In order to be handled easily, the sheet member which is obtained with the above process is cut into a predetermined size.

Then, it is preferable that organic binders like resin be impregnated into the sheet member which is cut. By doing this, bulkiness of the sheet member is restricted. Also, the handling ability of the sheet member is improved. Also, when hot exhaust gas is introduced into the exhaust gas processing device during performing, organic binders which are immersed in the holding sealer disappear, and thereby the compressed holding sealer is restored, tiny gaps which might exist between the casing and the exhaust gas processing body are sealed up, and thus, retention and sealing ability of the holding sealer are improved.

It is preferable that the content of organic binder be between 1.0 and 10.0 weight%. If the content is less than 1.0 weight%, the secession of inorganic fiber cannot be prevented enough. Also, if the content is greater than 10.0 weight%, the amount of organic ingredients which is discharged at the time of use of the exhaust gas processing device is increased.

Also, as organic binder, epoxy resin, acryl resin, rubber resin, styrenic resin and others can be used. It is preferable to use acrylic resin (ACM), acrylnitryl-butadiene gum(NBR), stylene-butadiene gum(SBR) as organic binders.

The resin is impregnated in the sheet member by spray coating using aqueous dispersion prepared with the above organic binders and water. Also, any excess coated solid and water included in the sheet member are removed in the next step.

In next step, any excess solid is removed and a drying process is performed. Removing of the excess solid is processed by vacuum aspiration. Also, removing of the excess water is processed by a heat compression drying method. In this method, because a pressing pressure is applied to the sheet member, the excess water can be removed and the sheet member can be thinned. The drying process is performed around 95-155 °C. If the temperature is lower than 95 °C, the drying time takes more long time and production efficiency decreases. Also, if the drying temperature is higher than 155 °C, decomposition of organic binder themselves begins to start and adhesive performance due to organic binder is lost.

Finally, a predetermined form of the sheet member can be cut. (For example, the shape shown in Fig. 1)

For example, the sheet member which is obtained in the above method can be used as the holding sealer 15 of the exhaust gas processing body 20 of the exhaust gas processing device 10, as shown in Fig. 13. In this case, the holding sealer 15 is wound around the exhaust gas processing body 20, a fitting salient 50 and a fitting reentrant 60 of the end that is joined are fitted together and fixed. Then, in such condition, one unified article of the holding sealer 15 and the exhaust gas processing body 20 is placed into the casing 12 composed of stainless steel and the like.

As described above, the sheet member of the present disclosure has good strength for each placing method; thereby the occurrence of detachment and cracks in the sheet member is avoided in the case of placing the covered exhaust gas processing body 210 into the casing 12 by either method. Also, after the holding sealer (the sheet member) is placed into the casing 12, the position of the holding sealer within the casing is stable and the holding ability to the exhaust gas processing body of the holding sealer is improved because of good repulsion capability of the sheet member of the present disclosure.

In the below, effects of the present invention will be explained using examples. Also, in the below examples, based on each examination assuming each case in which the covered exhaust gas processing body is placed into the casing by the pressing method and the non-pressing method like the sizing method and the like, characteristics of each sheet member are evaluated.

### Examples

Evaluations of the sheet member assumed to be placed by the pressing method.

The sheet member is manufactured by the following procedures.

### Manufacturing of the sheet member

The silica sol was blended to basic aluminum chloride solution (aluminum content:70 g/l, Al/Cl=1.8(atomic ratio)) so as to be Al₂O₃:SiO₂=72:28 in composition of alumina fibers, then the precursors of alumina fibers were formed.

Then, organic copolymers like polyvinyl alcohol were added to the precursor of alumina fibers. Also, the solution was diluted to be as the spinning solution, the spinning was performed with the blowing method using the spinning solution. Then, folded structures of the precursor of alumina fibers were laminated, and the laminated sheet of alumina fibers was manufactured.

Then, the needling process was performed on this laminated sheet. The needling process was performed from both sides of the laminated sheet such that two pairs of needle boards each having needles of 500/100 per cm² were disposed on the both sides of the laminated sheet. The transportation speed of the laminated sheet is set as 1 mm/second. In the present example, the inter-woven pattern formed on the laminated sheet after the needling process was the above vertical arrangement pattern (see Fig. 7). Also, the pitch P between rows of inter-woven points was constant, and it was 3 mm.

The sheet member where the density ρ of the inter-woven points is about 7 number/cm² was obtained by such needling process. Then, the obtained sheet member was continuously fired from the ambient temperature to the hottest temperature 1250 °C, then the sheet member of alumina fibers having 1160 g/cm² concentration was obtained. The average fiber diameter of alumina fibers was 5.8 µm and minimum diameter was 3.2 µm.

Also, the average diameter of fibers is measured by the following method. First, alumina fibers were put into a cylinder, a pressure crush process was applied at 20.6 Mpa. Then, these samples were put on a filter net, and samples which passed through the filter net were selected as an examination body for electron microscopic observation. After gold is evaporated on a surface of the examination body, electron microscopic pictures (almost 1500x) were taken. The diameter of fibers is measured for at least 40 fibers based on the obtained pictures. This step is repeated for 5 samples and the average measured value was the average diameter of fibers.

The sheet member which was manufactured by the above process was cut to be the shape shown in Fig. 1 (the maximum length of X direction is about 460 mm and the maximum length of Y direction is about 135 mm).

The sheet member obtained by such process is example 1. Also, in examples of the present invention, for each evaluation examination shown below, organic binders were not immersed in the sheet member in order to evaluate repulsion force of the sheet member itself accurately.

Then, sheet members of examples 2-6 were manufactured using same process as the above step of the example 1, except the density of the inter-woven points was in a range between 3 number/cm² and 17 number/cm² by changing the transportation speed of the laminated sheet at the time of the needling process. Also, the sheet member of example 7 was manufactured to be 0.5 number/cm² of the density of the inter-woven points formed on the surface of the sheet member using the same process as the example 1. However, for this sheet member, only one needle board providing 50 needles /100 cm² was used, and the needle board was press-contacted from only one side of the laminated sheet at the time of the needling process. In addition, sheet members of comparative examples 1-5 were manufactured using the same process as the above example 1, except the density of the inter-woven points formed on the surface of the sheet member was in a range between 21 number/cm² and 33 number/cm². The inter-woven pattern of the sheet member according to examples 2-6 and comparative examples 1-5 except example 7 was the vertical arrangement pattern and the pitch was constantly 3 mm. On the other hand, the inter-woven pattern of the sheet member according to example 7 was the even dispersion pattern. Further, the precursor of alumina fibers was formed with the same method as the above example 1. Organic polymers such as polyvinyl alcohols are added to the precursor of alumina fibers. Then, this liquid is condensed and a spinning solution is prepared. Also, the spinning is processed with a blowing method by using the spinning solution. Then, folded structures of the precursor of alumina fibers were laminated, and the laminated sheet of alumina fibers was manufactured. This is as the sheet member of the comparative example 6. Also, the needling process was not performed at all and the density ρ of the inter-woven point was zero for the comparative example 6.

The density of the inter-woven points of the sheet member of example 1-7 and comparative examples 1-6 which are manufactured by such method are shown in table 1.

**Table 1**

| | DENSITY OF INTER-WOVEN POINTS (NUMBER/cm²) | EXAMINATION RESULTS OF PRESS-FITTING | SURFACE PRESSURE (kPa) |
|---|---|---|---|
| EXAMPLE 1 | 7 | GOOD | 229 |
| EXAMPLE 2 | 3 | DETACHED AFTER THE EXAMINATION OF PRESS-FITTING | 233 |
| EXAMPLE 3 | 5 | GOOD | 231 |
| EXAMPLE 4 | 10 | GOOD | 222 |
| EXAMPLE 5 | 14 | GOOD | 212 |
| EXAMPLE 6 | 17 | GOOD | 191 |
| EXAMPLE 7 | 0.5 | DETACHED AT THE END WHEN THE SHEET MEMBER IS WOUND | 235 |
| COMPARATIVE EXAMPLE 1 | 21 | GOOD | 182 |
| COMPARATIVE EXAMPLE 2 | 24 | GOOD | 174 |
| COMPARATIVE EXAMPLE 3 | 27 | GOOD | 171 |
| COMPARATIVE EXAMPLE 4 | 30 | GOOD | 169 |
| COMPARATIVE EXAMPLE 5 | 33 | GOOD | 167 |
| COMPARATIVE EXAMPLE 6 | 0 | NOT ABLE TO BE WOUND AROUND | 174 |

In the below, evaluation examination was performed using each obtained sheet member or samples which were cut from the above each sheet member.

### Examinations of press-fitting

Examinations of press-fitting were performed in order to confirm strength of each sheet member manufactured by the above method. This examination was performed as following. First, each sheet member of examples 1-7 and comparative examples 1-6 was wound around the outer surface of catalyst carrier having an almost cylindrical shape (outer diameter was 143.8 mm, length was 150 mm), then ends were fitted together and unified as one body. Next, this one unified article was pressed into the stainless casing (inner diameter was 150.4 mm, length was 150 mm). Then, the casing was cut almost in half along an axis direction with a cutter, the one unified article was taken out, and existence or non-existence of cracks on the surface of the sheet member was observed.

Results obtained from each sheet member are shown in table 1. When sheet members of examples 1, 3-6 and comparative examples 1-5 were used, there is no crack and detachment at the end of sheet members after examination, so that good conditions were shown. On the other hand, in the case of using the sheet member of example 7, the detachment is occurred at the end of the sheet member when the sheet member is wound around the catalyst carrier and both ends are fitted together and unified as one body (thus, the further press-fitting examination was not performed on the sheet member of example 7). Also, it was recognized that the detachment occurred at the fitting part of the end of the sheet member after the press-fitting examination in the examination that used the sheet member of example 2. Also, the sheet member of comparative example 6 could not be wound around the catalyst carrier.

### Examinations for evaluating surface pressure

Next, examinations for evaluating surface pressure were performed using samples collected from each sheet member manufactured in the above method. A device 110 which is used for examinations for valuating surface pressure is shown in Fig. 14. The device 110 comprises a gate-shaped prop 130 provided on a sample holding stand 120 which is almost horizontal. A crosshead 140 which is moved up and down and has a load measurement function is provided at the center (an upper part of the sample holding stand 120) of the device 110. An upper part disk plate 150 of almost 100 mm diameter is provided on a bottom side of the crosshead 140. A displacement meter 160 is provided on the upper part of disk plate 150. A bottom part disk plate 170 with almost 100 mm diameter is provided on the sample holding stand 120. The bottom part disk plate 170 is on the same vertical axis as a vertical axis of the upper part disk plate 150 and both plates are provided to face each other. Samples 180 (50 mm x 50 mm) of each sheet member which weight is known are provided on the bottom part disk plate 170.

The surface pressure measurement is performed using such device 110 in the below method. First, the crosshead 140 is moved down to a level so that a gap does not appear to be produced between the sample 180 and the upper part disk plate 150 beforehand. In this state, the crosshead 140 is moved down at the speed of 1 mm/minute, the sample 180 is compressed, and a load produced on the sample 180 is measured when a bulk density of the sample 180 becomes 0.3 g/cm². Also, the bulk density of the sample 180 can be measured from a weight of the sample 180/an area of the sample 180/an interval between the upper part disk plate 150 and the bottom part disk plate 170. The obtained load is divided by the area of the sample, and thereby the surface pressure (kPa) is obtained.

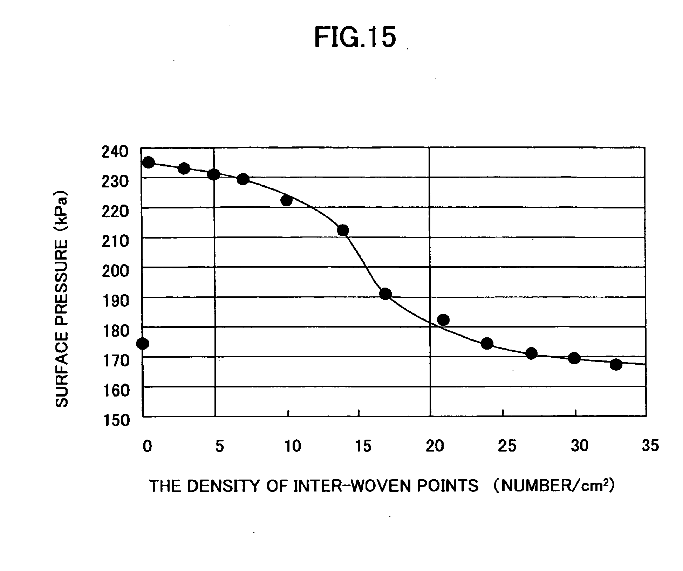

A result of the obtained surface pressure measurement for each sheet member is shown in Table 1. Also, in Fig. 15, the result of the obtained surface pressure measurements is shown as a graph. The horizontal axis of Fig. 15 is the density of the inter-woven points of the sheet member and the vertical axis is the measured surface pressure. As described above, there is a tendency that when the density of the inter-woven points of the sheet member is increased, the surface pressure is decreased. However, when the number of the inter-woven point is increased remarkably, the surface pressure is not changed any more and keeps stable. It is thought that the reason is that a difference does not occur for repulsion capability because the fineness of the sheet member does not change any more as the number of the inter-woven points is remarkably increased. In the case of 20 number/cm² or below, as shown in Fig. 15, the surface pressure is drastically increased; thereby the holding ability of the exhaust gas processing body can be improved remarkably. Also, in the case of 0.5 number/cm² or above, a degree to be intertwined along the direction of thickness of fibers of the sheet member become strong, and it is possible to restrict the detachment along the direction of thickness of the sheet member during the handling. In the case of 20 number/cm² or below, the reason why the surface pressure rises is not clear, but is estimated as follows.

The repulsion force which occurs when a group of inorganic fibers are compressed depends on the total amount of bending stress of inorganic fibers. Therefore, it is thought that the repulsion force of the sheet member is increased as the bending stress of each inorganic fiber increases. Also, when it is usual, inorganic fibers have curved shapes, and the bending stress is increased as a degree of curvature increases. Next, considering a case where the needling process is performed on the sheet member, it is predicted that inorganic fibers having a large degree of curvature are disposed in three dimensions for the sheet member in which the density of the inter-woven points is decreased by the needling process. On the other hand, for the sheet member in which the density of the inter-woven points is increased by the needling process, inorganic fibers tend to be disposed in two dimensions. Therefore, both sheet members are compressed with the same condition, and it is thought that the repulsion force is increased for the former situation.

As described above, there was no detachment at the time of handling for the sheet member having 3 number/cm² or below of the number of the inter-woven points (examples 2, 7), but the detachment was observed on the end after press-fitting during winding, and the strength was not enough. On the other hand, when the number of the inter-woven points is over 20 number/cm² (comparative examples 1-5), the declining of the surface pressure is drastic. Therefore, based on the press-fitting results and this result, it is preferable that the number of the inter-woven points of the sheet member be in a range 5 number/cm² ≦ ρ < 20 number/cm² in order to obtain the sheet member having good strength and repulsion capability when assuming the above mentioned pressing method is used.

In the sheet member used normally as the holding sealer of the exhaust gas processing device, the density of the inter-woven points is mostly in a range between about 19 number/cm² and 21 number/cm². The surface pressure of such a sheet member is calculated as about 180 kPa based on Fig. 15. On the other hand, for the sheet member for which the density of the inter-woven points is less than 14 number/cm², the surface pressure is 190 kPa or above, and it is recognized that the sheet member which has great repulsion force (the surface pressure) compared to a conventional sheet member can be obtained. In addition, analyzing the result of Fig. 15 in more detail, it is recognized that a change tendency of the surface pressure is different (the change is discontinuous) in relation to the density of the inter-woven points at the position where the density of the inter-woven points is around 15 number/cm² (between 14 number/cm² and 17 number/cm²); that is, an inflection point of the surface pressure change exists at this point. According to this tendency, when the density of the inter-woven points is over 15 number/cm², the surface pressure is decreased drastically. On the other hand, when the density of the inter-woven points is less than 15 number/cm², the surface pressure can keep stable in a high range. Therefore, from the point of view that the surface pressure is kept in a high range, it is preferable that the upper limit of the density of the inter-woven points of the sheet member used in the pressing method be ρ < 15 number/cm².

Evaluation of the sheet member assumed to be placed by the non-pressing method

### Manufacturing of the sheet member

The sheet member was manufactured by the same method described in the "evaluations of the sheet member assumed to be placed by the pressing method". The density of the inter-woven points of sheet members manufactured in examples 8-10 and comparative examples 7 and 8 is shown in table 2.

**Table 2**

| SAMPLE | DENSITY OF INTER-WOVEN POINTS | EXAMINATION RESULTS OF THE COMPRESSION RESTORATION REPETITION | |
|---|---|---|---|
| | | SURFACE PRESSURE AFTER 1 CYCLE | SURFACE PRESSURE AFTER 1000 CYCLES |
| | (NUMBER/cm²) | UPPER COLUM: COMPRESSION | UPPER COLUM: COMPRESSION |
| | | / | / |
| | | LOWER COLUMN : RESTORATION (kPa) | LOWER COLUMN : RESTORATION (kPa) |
| EXAMPLE 8 | 4 | 235 | 140 |
| | | 115 | 61 |
| EXAMPLE 9 | 8 | 226 | 126 |
| | | 106 | 53 |
| EXAMPLE 10 | 13 | 200 | 111 |
| | | 85 | 39 |
| COMPARATIVE EXAMPLE 7 | 0 | 174 | 115 |
| | | 91 | 57 |
| COMPARATIVE EXAMPLE 8 | 21 | 184 | 90 |
| | | 69 | 24 |

Also, the needling process was not performed at all and the density ρ of the inter-woven points was zero for the comparative example 7. Also, the inter-woven pattern of the sheet member according to examples 8-10 and comparative example 8 was the vertical arrangement pattern and the pitch was constantly 3 mm. In addition, organic binder is not immersed in either sheet member the same as the above mentioned case.

Thus, the following evaluation examination was performed using samples cut out from each sheet member which is obtained in the above method.

### Compression restoration repetition examination

The compression restoration repetition examination was performed using samples collected from the above each sheet member. In this examination, compression and restoration of the sheet member are repeated 1000 times maximum, and a change of the surface pressure of the sheet member is measured.

When the exhaust gas processing device is used to place on vehicles and the like, dimensions of the casing and the exhaust gas processing body are changed with increasing/decreasing temperature of the device due to the communication/termination of the exhaust gas (corresponding to on/off of the engine). Therefore, the sheet member which exists between both receives repetitive stress load by compression and restoration in the device. In this examination, since such a state of the sheet member can be expressed by the repetition cycles of compression and restoration, the holding ability of the sheet member after long term usage can be evaluated by simulation.

Also, when the covered exhaust gas processing body is placed into the casing by the sizing method, a phenomenon called "overshoot" takes place in the casing. This is a phenomenon occurring in the case of using the metallic casing, that is, a phenomenon to extend somewhat the inner diameter of the casing by a restoration force (repulsion force) of the metallic shape itself right after processing to shorten the diameter of the casing. Therefore, actually, after the sheet member receives a big compressive force by the shortened diameter of the casing first, the sheet member receives a restoration force due to this overshoot. In the present examination, stress behavior that the sheet member receives can be simulated in the case of placing by such a real sizing method in a side for a short cycle.

In the examination, the device 110 (Fig. 14) which was used in the above surface pressure evaluation examination is used. That is, sample 180 (50 mm x 50 mm) of each sheet member which has known weight is placed on the bottom disk plate 170 of the device 110, then the examination is performed with the below procedures.

First, the crosshead 140 is moved down to a level so that a gap is not produced in appearance between the sample 180 and the upper part disk plate 150 beforehand. In this state, the crosshead 140 is moved down at the speed of 1 mm/minute, the sample 180 is compressed, and a load produced on the sample 180 is measured when a bulk density of the sample 180 becomes 0.3 g/cm². Also, the bulk density of the sample 180 can be measured from a weight of the sample 180/an area of the sample 180/an interval between the upper part disk plate 150 and the bottom part disk plate 170. The obtained load is divided by the area of the sample, and thereby the compressive surface pressure (kPa) is calculated.

Next, the crosshead 140 is elevated at a speed of 1 mm/minute, and the sample 180 is restored. When the bulk density of the sample 180 is 0.275 g/cm³, load to occur in the sample 180 is measured. Then this obtained value is converted to the surface pressure in the above method, and a restorative surface pressure (kPa) is calculated. This operation is repeated 1000 cycles, then the compressive surface pressure of the sheet member and the change of the restorative surface pressure are measured. Also, the up and down speed of the crosshead is 1 mm/minute. Further, the same measurement for each sample is done three times, and an average value for these values is used as the result below.

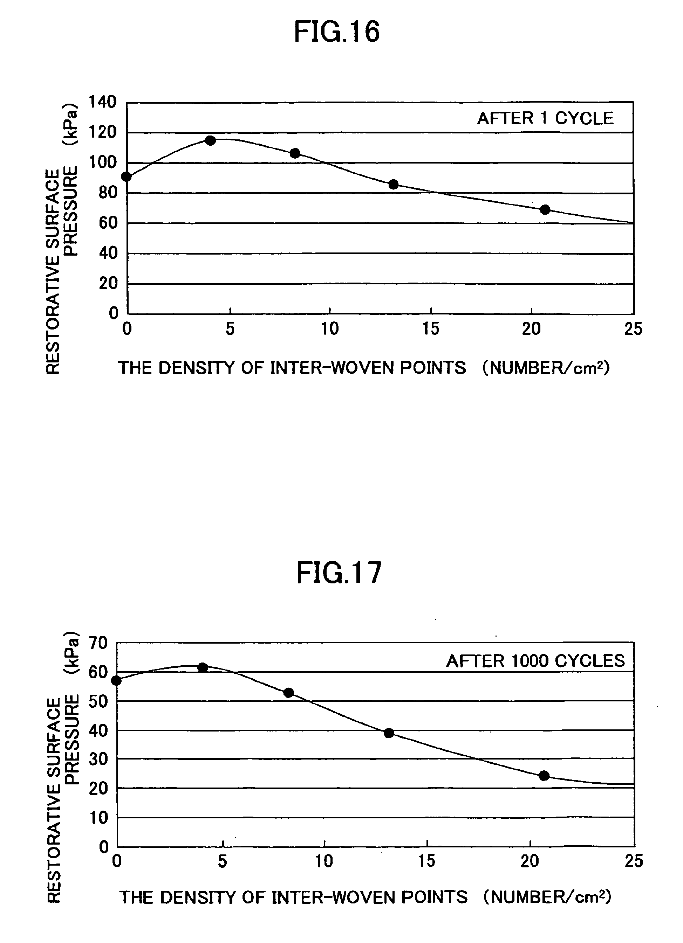

One example of the obtained results about each sample is shown in Fig. 16 and 17. In both figures, the horizontal axis is the density ρ of the inter-woven points (number/cm²), and the vertical axis is the restorative surface pressure (kPa). Also, Fig. 16 shows the restorative surface pressure after one cycle. Fig. 17 shows the restorative surface pressure after 1000 cycles.

Based on both figures, it is recognized that the restorative surface pressure is a maximum value when the density ρ of the inter-woven points is about 4 number/cm² in either case of after one cycle or after 1000 cycles. Also, it is recognized that the extremely good restorative surface pressure can be obtained when the density ρ of the inter-woven point is in a range between 0 number/cm² ≦ ρ < 10 number/cm². Further, the restorative surface pressure did not change very much compared to the density ρ of the inter-woven points when the density of the inter-woven points exceeds about 20 number/cm².

Based on this result and the result (Fig. 15) of the above surface pressure evaluation examination, it is recognized that the lower limit of the most suitable density ρ of the inter-woven points of the sheet member in the case of placing the sheet member into the casing by the non-pressing method can be more extended compared to the case of the pressing method (5 number/cm² ≦ ρ). Different from the pressing method, it is because that the shear force due to friction does not occur between the inner face of the casing and the outer surface of the sheet member at the time of placing the covered exhaust gas processing body into the casing for the non-pressing method. However, actually, it is still needed that the sheet member be wound around the outer surface of the exhaust gas processing body and fixed onto the exhaust gas processing body for the non-pressing method; thereby, it is not preferable to have occur cracks and the like on the sheet member at the time of this operation. Therefore, the density (0.5 number/cm²) ρ of the inter-woven points of the sheet member according to comparative example 1 is the lower limit of the density of the inter-woven point of the sheet member used for the non-pressing method. On the other hand, based on results of Fig. 15, 16 and 17, the upper limit of the most suitable density ρ of the inter-woven point of the sheet member in the case of placing the sheet member into the casing with the non-pressing method is the same value in the case of the pressing method; that is, ρ ≦ 20 number/cm², especially, it is preferable that ρ ≦ 15 number/cm².

Based on the above description, an appropriate range of the density ρ of the inter-woven points of the sheet member which is placed into the casing with the non-pressing method is 0.5 number/cm² ≦ ρ ≦ 20 number/cm², preferably 0.5 number/cm² ≦ ρ ≦ 15 number/cm², and more preferably 0.5 number/cm² ≦ ρ ≦ 10 number/cm². Also, these appropriate ranges are based on examination results in the case of excluding organic binders in the sheet member. Thus, it is predicted that the lower limit of the appropriate density of the inter-woven points in the case of immersing organic binders in the sheet member is more decreased.

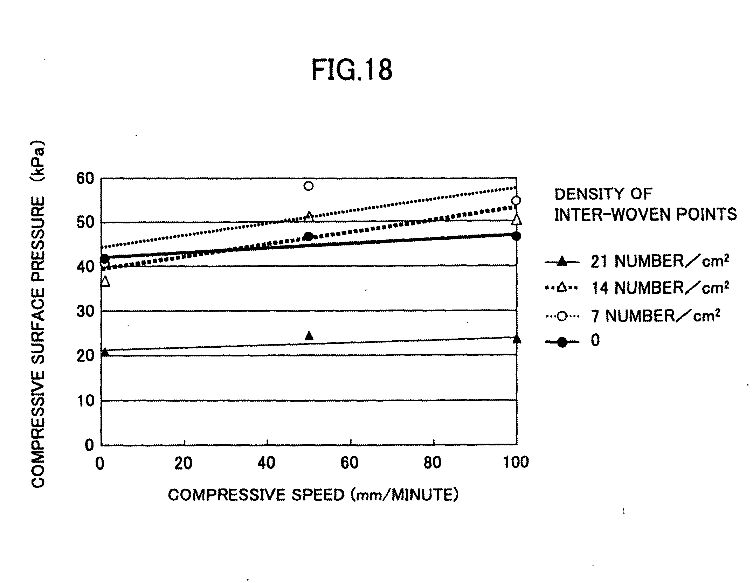

A relationship between the compressive speed and the compressive surface pressure (0 cycle) at the time of compressing the sheet member is shown in Fig. 18. This figure is a result obtained from the below examination using the above device (Fig. 14) for the surface pressure evaluation examination. First, the sheet member sample (either sheet member of the above examples 1, 3 and comparative examples 3, 8) is placed on the bottom disk plate 170 of the device 110 for the surface pressure evaluation examination shown in Fig. 14. Next, as the same procedures in the above surface pressure evaluation examination, the crosshead 140 is moved down and the sample is compressed to get the bulk density of 0.2g/cm² and the compressive surface pressure is measured at that time. The same measurement is performed by changing the speed of moving down (that is, compressive speed) of the crosshead 140 from 1 mm/minute to 100 mm/minute. Such examination is performed on the sheet member sample having the density ρ of the inter-woven points for each kind.

Based on Fig. 18, it is recognized that the surface pressure tends to be increased as the compressive speed is increased independent from the density of the inter-woven points of the sheet member. Especially, an incline of a correlative straight line becomes extremely big for the sheet member for which the density ρ of the inter-woven points is 7 number/cm² and 14 number/cm² (corresponding to the above examples 1 and 5). Based on these correlative straight lines, it is recognized that the compressive surface pressure was increased from about 45 to about 52 kPa (increased 16%) when the compressive speed was increased from about 1 mm/minute to about 50 mm/minute for the sheet member which the density ρ of the inter-woven points is 7 number/cm², and the compressive surface pressure was increased from about 40 to about 47 kPa (increased 18%) for the sheet member which the density ρ of the inter-woven point is 14 number/cm².

As the above sizing method, the sheet member is compressed with high compressive speed (for example, about 50 mm/minute) when the covered exhaust gas processing body 210 is placed into the casing and the outer surface of the casing is compressively shortened. That is, it is predicted that the surface pressure that the sheet member receives due to a placement by the sizing method is increased 16% and 18% respectively based on the correlative straight line for the sheet member which the density ρ of the inter-woven points is 7 number/cm² and 14 number/cm², compared to the case that the compressive speed is 1 mm/minute. Thus, even though the density ρ of the inter-woven points of the sheet member are almost same, in the sizing method, the surface pressure of the sheet member which is placed on the completed exhaust gas processing device can be increased more than other non-compressive methods.

### Industrial Applicability

The exhaust gas processing device of the present invention is applicable to the exhaust gas processing units and the like for vehicles.

The present invention is not limited to the specifically disclosed embodiment.

## Claims

1. An exhaust gas processing device comprising:
an exhaust gas processing body,
a holding sealer wound onto at least a portion of outer surfaces of the exhaust gas processing body, and
a casing housing the exhaust gas processing body and the holding sealer wound around the processing body,
wherein the holding sealer includes a sheet member including inorganic fibers, the sheet member having multiple inter-woven points formed on a front face and a back face of the sheet member by performing a needling process from both sides,
wherein a density ρ of the inter-woven points is in a range 5 number/cm² ≤ ρ < 20 number/cm², and
wherein the exhaust gas processing body around which the holding sealer is wound is placed into the casing by a pressing method.

2. The exhaust gas processing device as claimed in claim 1,
wherein the inter-woven points are formed in a row pattern or randomly distributed on at least the front face and/or the back face of the sheet member.

3. The exhaust gas processing device as claimed in claims 1 or 2,
wherein the sheet member comprises binders.

4. The exhaust gas processing device as claimed in any one of claims 1 to 3,
wherein the inorganic fibers of the sheet member are a mixture of alumina and silica.

5. The exhaust gas processing device as claimed in any one of claims 1 to 4,
wherein the density ρ of the inter-woven points of the sheet member is in a range 5 number/cm² ≤ ρ < 15 number/ cm².

6. The exhaust gas processing device as claimed in any one of claims 1 to 5,
wherein the exhaust gas processing body is a catalyst carrier or an exhaust gas filter.

7. A manufacturing method of an exhaust gas processing device including an exhaust gas processing body, a holding sealer, and a casing housing the exhaust gas processing body and the holding sealer inside;
wherein the manufacturing method comprises:
a step of providing the holder sealer,
a step of winding the holding sealer onto at least a part of an outer surface of the exhaust gas processing body, and
a step of placing the exhaust gas processing body around which processing body is wound the holding sealer into the casing by a pressing method,
wherein the holding sealer includes a sheet member including inorganic fibers, the sheet member having multiple inter-woven points formed on a front face and a back face of the sheet member by performing a needling process from both sides,
wherein a density ρ of the inter-woven points is in a range 5 number/cm² ≤ ρ < 20 number/cm².

8. The manufacturing method as claimed in claim 7, wherein the exhaust gas processing device is configured as claimed in any one of claims 2 to 5.

## Patentansprüche

1. Abgasbearbeitungseinrichtung, die umfasst:
einen Abgasbearbeitungskörper,
eine Haltedichtung, die auf wenigstens einen Abschnitt von äußeren Oberflächen des Abgasbearbeitungskörpers gewickelt ist, und
ein Gehäuse, das den Abgasbearbeitungskörper und die Haltedichtung, die um den Bearbeitungskörper gewickelt ist, aufnimmt,
bei der die Haltedichtung ein Blattelement enthält, das organische Fasern enthält, wobei das Blattelement mehrere miteinander verwobene Punkte aufweist, die auf einer Vorderfläche und einer Rückfläche des Blattelements mittels Durchführens eines Nadelungsverfahrens von beiden Seiten ausgebildet sind,
bei der eine Dichte ρ der miteinander verwobenen Punkte sich in einem Bereich von 5 Anzahl/cm² ≤ ρ ≤ 20 Anzahl/cm² befindet, und
bei welcher der Abgasbearbeitungskörper, um den die Haltedichtung gewickelt ist, mittels eines Pressverfahrens in dem Gehäuse platziert ist.

2. Abgasbearbeitungseinrichtung nach Anspruch 1, bei der die miteinander verwobenen Punkte in einem Reihenmuster oder zufällig verteilt auf wenigstens der Vorderfläche und/oder Rückfläche des Blattelements ausgebildet sind.

3. Abgasbearbeitungseinrichtung nach Anspruch 1 oder 2, bei der das Blattelement Bindemittel umfasst.

4. Abgasbearbeitungseinrichtung nach einem der Ansprüche 1 bis 3, bei der die anorganischen Fasern des Blattelements eine Mischung aus Aluminiumoxid und Silica sind.

5. Abgasbearbeitungseinrichtung nach einem der Ansprüche 1 bis 4, bei der die Dichte ρ der miteinander verwobenen Punkte des Blattelements sich in einem Bereich von 5 Anzahl/cm² ≤ p ≤ 15 Anzahl/cm² befindet.

6. Abgasbearbeitungseinrichtung nach einem der Ansprüche 1 bis 5, bei welcher der Abgasbearbeitungskörper ein Katalysatorträger oder ein Abgasfilter ist.

7. Herstellungsverfahren für eine Abgasbearbeitungseinrichtung, die einen Abgasbearbeitungskörper, eine Haltedichtung und ein Gehäuse enthält, das den Abgasbearbeitungskörper und die Haltedichtung darin aufnimmt;
wobei das Herstellungsverfahren umfasst:
einen Schritt des Bereitstellens der Haltedichtung,
einen Schritt des Wickelns der Haltedichtung auf wenigstens einen Teil einer Außenoberfläche des Abgasbearbeitungskörpers, und
einen Schritt des Platzierens des Abgasbearbeitungskörpers, wobei um den Bearbeitungskörper die Haltedichtung gewickelt ist, in das Gehäuse mittels eines Pressverfahrens,
bei dem die Haltedichtung ein Blattelement enthält, das anorganische Fasern enthält, wobei das Blattelement mehrere miteinander verwobene Punkte aufweist, die auf einer Vorderfläche und einer Rückfläche des Blattelements mittels Ausführens eines Nadelungsprozesses von beiden Seiten ausgebildet werden,
bei dem eine Dichte ρ der miteinander verwobenen Punkte sich in einem Bereich von 5 Anzahl/cm² ≤ ρ ≤ 20 Anzahl/cm² befindet.

8. Herstellungsverfahren nach Anspruch 7, bei dem die Abgasbearbeitungseinrichtung aufgebaut ist, wie es in einem der Ansprüche 2 bis 5 beansprucht ist.

## Revendications

1. Dispositif de traitement des gaz d'échappement comprenant :
un corps de traitement des gaz d'échappement,
une bande d'étanchéité de maintien enroulée sur au moins une partie des surfaces externes du corps de traitement de gaz d'échappement, et
un carter logeant le corps de traitement de gaz d'échappement et la bande d'étanchéité de maintien enroulée autour du corps de traitement,
dans lequel la bande d'étanchéité de maintien comprend un mat comprenant des fibres inorganiques, le mat ayant de multiples points entrelacés formés sur une face avant et une face arrière du mat en effectuant un procédé d'aiguilletage depuis les deux côtés,
dans lequel une densité p des points entrelacés se trouve dans une plage de 5 en nombre/cm² ≤ ρ < 20 en nombre/cm², et
dans lequel le corps de traitement de gaz d'échappement autour duquel est enroulée la bande d'étanchéité de maintien est placé dans le carter par un procédé de pressage.

2. Dispositif de traitement des gaz d'échappement selon la revendication 1, dans lequel les points entrelacés sont formés en une rangée ou répartis de façon aléatoire sur au moins la face avant et/ou la face arrière du mat.

3. Dispositif de traitement des gaz d'échappement selon la revendication 1 ou 2,
dans lequel le mat comprend des liants.

4. Dispositif de traitement des gaz d'échappement selon l'une quelconque des revendications 1 à 3,
dans lequel les fibres inorganiques du mat sont un mélange d'alumine et de silice.

5. Dispositif de traitement des gaz d'échappement selon l'une quelconque des revendications 1 à 4,
dans lequel la densité ρ des points entrelacés du mat est dans une plage de 5 en nombre/cm² ≤ ρ < 15 en nombre/cm².

6. Dispositif de traitement des gaz d'échappement selon l'une quelconque des revendications 1 à 5,
dans lequel le corps de traitement de gaz d'échappement est un support catalytique ou un filtre de gaz d'échappement.

7. Procédé de fabrication d'un dispositif de traitement des gaz d'échappement comprenant un corps de traitement de gaz d'échappement, une bande d'étanchéité de maintien et un carter logeant le corps de traitement de gaz d'échappement et la bande d'étanchéité de maintien ;
le procédé de fabrication comprenant :
une étape de fourniture de la bande d'étanchéité de maintien,
une étape d'enroulement de la bande d'étanchéité de maintien sur au moins une partie d'une surface externe du corps de traitement de gaz d'échappement, et
une étape de mise en place du corps de traitement de gaz d'échappement autour duquel est enroulée la bande d'étanchéité de maintien dans le carter par un procédé de pressage,
dans lequel la bande d'étanchéité de maintien comprend un mat incluant des fibres inorganiques, le mat ayant de multiples points entrelacés formés sur une face avant et une face arrière du mat en utilisant un procédé d'aiguilletage depuis les deux côtés,
dans lequel une densité ρ des points entrelacés est dans une plage de 5 en nombre/cm² ≤ ρ < 20 en nombre/cm².

8. Procédé de fabrication selon la revendication 7, dans lequel le dispositif de traitement des gaz d'échappement est configuré selon l'une quelconque des revendications 2 à 5.
